# EUROPEAN PATENT APPLICATION

(11) **EP 4 435 948 A2**
(43) Date of publication of application: **25.09.2024**
(21) Application number: 23214732.2
(22) Date of filing: 06.12.2023
(51) Int. Cl.: H01M 50/209, H01M 50/293, H01M 50/503, H01M 50/51, H01M 50/516, H01M 50/588, H01M 50/593

(54) **POWER STORAGE MODULE**

(30) Priority: 23.03.2023 JP 2023046105
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A power storage module (1) includes a power storage device pair (10) having a first power storage device (100) having a first case (110) electrically connected to a negative current collector (150d) of an electrode body (150), and a positive external terminal (160) connected to a positive current collector (150c) of the electrode body (150), and a second power storage device (200) having a second case (210) electrically connected to a positive current collector (250c) of an electrode body (250), and a negative external terminal (270) connected to a negative current collector (250d) of the electrode body (250), and the first case (110) and the second case (210) are electrically connected to each other, while the first power storage device (100) and the second power storage device (200) are connected in series.

## Description

### BACKGROUND

### Technical field

The invention relates to a power storage module including a plurality of power storage devices each having an electrode body housed in a conductive case.

### Related Art

A battery module including a plurality of batteries each having an electrode body housed in a conductive case is known. The known battery module uses batteries each having a positive external terminal and a negative external terminal that are respectively insulated from the case and fixed to the case in the insulated condition, and the positive external terminal of one of the batteries, for example, is electrically connected to the negative external terminal of another battery adjacent to the one battery, via a conductive connecting member, such as a bus bar, which is separately prepared. One example of the related art is described in Patent Document 1 (see FIG. 1, FIG. 2, etc. of Patent Document 1).

### Citation List

### Patent Documents

Patent Document 1: Japanese unexamined patent application publication No. 2022-010714

### SUMMARY

### Technical Problems

However, the battery described above is configured such that the positive external terminal and the negative external terminal are respectively insulated from the case; therefore, an insulating member is required for each of the positive external terminal and the negative external terminal, resulting in a large number of components.

The invention was developed in view of the above situation, and provides a power storage module including a plurality of power storage devices that permits the number of components to be reduced, as compared with the power storage device in which the positive external terminal and the negative external terminal are respectively insulated from the case.

### Means of Solving the Problems

(1) To achieve the above problems, one aspect of the invention provides a power storage module including a plurality of power storage devices each having a case having electrical conductivity, and an electrode body housed in the case and including a positive current collector and a negative current collector, characterized in that the power storage module includes a power storage device pair as a pair of the power storage devices having a first power storage device in which the case is a first case electrically connected to the negative current collector of the electrode body and held at a negative electrode potential, the first power storage device having a positive external terminal that is insulated from the first case and fixed to the first case, to be connected to the positive current collector of the electrode body in the first case, and a second power storage device in which the case is a second case electrically connected to the positive current collector of the electrode body and held at a positive electrode potential, the second power storage device having a negative external terminal that is insulated from the second case and fixed to the second case, to be connected to the negative current collector of the electrode body in the second case, wherein the first case and the second case are electrically connected to each other, and the first power storage device and the second power storage device are connected in series.

The power storage module described above includes one power storage device pair or two or more power storage device pairs each having the first power storage device and the second power storage device.

In the first power storage device, the first case is electrically connected to the negative current collector of the electrode body, and the first case also serves as a negative external terminal; therefore, no insulating member is required for the negative electrode. Thus, the number of components can be reduced, as compared with the power storage device in which the positive external terminal and the negative external terminal are respectively insulated from the case.

Also, in the second power storage device, the second case is electrically connected to the positive current collector of the electrode body, and the second case also serves as a positive external terminal; therefore, no insulating member is required for the positive electrode. Thus, the number of components can be reduced, as compared with the power storage device in which the positive external terminal and the negative external terminal are respectively insulated from the case.

The first case of the first power storage device as one of the power storage device pair and the second case of the second power storage device as the other of the power storage device pair are electrically connected to each other; therefore, the first power storage device and the second power storage device can be connected with lower resistance, as compared with the case where the electrode external terminals fixed to the case while being insulated from the case are connected to each other.

The "power storage devices" include, for example, secondary batteries, such as lithium-ion secondary batteries, sodium-ion secondary batteries, and calcium-ion secondary batteries, and capacitors, such as lithium-ion capacitors.

The first case of the first power storage device as one of the power storage device pair and the second case of the second power storage device as the other of the power storage device pair may be connected, for example, by welding, brazing, or soldering, or may be simply brought into contact with each other to be connected, or may be connected via a conductive connecting member, such as a bus bar.

The first case and the negative current collector of the electrode body in the first power storage device may be connected, for example, by welding, brazing, or soldering, or may be connected via a conductive connecting member.

Also, the second case and the positive current collector of the electrode body in the second power storage device may be connected, for example, by welding, brazing, or soldering, or may be connected via a conductive connecting member.

In the case where the power storage module includes two or more power storage device pairs, the power storage device pairs may be connected in series or connected in parallel.

(2) In the power storage module described in (1), the power storage device pair may be configured such that the first case of the first power storage device and the second case of the second power storage device are welded together.

In the power storage module described above, the first case of the first power storage device as one of the power storage device pair and the second case of the second power storage device as the other of the power storage device pair are welded together; therefore, the resistance can be reduced as compared with the case where the first case and the second case are simply placed in contact with each other.

(3) In the power storage module described in (1) or (2), a plurality of the power storage device pairs may be provided, the first power storage device and the second power storage device that form each of the power storage device pairs may be superposed on each other in a stacking direction, and the power storage device pairs may be stacked in the stacking direction with an insulating member intervening between adjacent ones of the power storage device pairs.

In the power storage module described above, the first power storage device and the second power storage device which form each of the power storage device pairs are superposed on each other in the stacking direction, and the power storage device pairs are stacked in the stacking direction with the insulating member intervening between adjacent ones of the power storage device pairs. Thus, it is possible to provide the power storage module in which the first power storage device and the second power storage device which form each of the power storage device pairs are superposed on each other while the power storage device pairs are insulated from each other.

Examples of the "insulating member" include an insulating spacer made of insulating resin, ceramics, or the like, an insulating film made from an insulating resin film or a heat-shrinkable film with the heat-shrinkable property, and so forth.

### BRIEF DESCRIPTION OF THE DRAWINGS

FIG. 1 is a partially broken cross-sectional view of a battery module according to one embodiment;
FIG. 2 is a top view of the battery module according to the embodiment;
FIG. 3 is a perspective view of a first battery according to the embodiment;
FIG. 4 is a partially broken cross-sectional view of the first battery according to the embodiment, taken along the case height direction and the case width direction;
FIG. 5 is a cross-sectional view of the first battery according to the embodiment, which view is seen in the direction of arrows B - B in FIG. 4 and taken along the case width direction and the case thickness direction;
FIG. 6 is a perspective view of a second battery according to the embodiment;
FIG. 7 is a partially broken cross-sectional view of the second battery according to the embodiment, taken along the case height direction and the case width direction; and
FIG. 8 is a cross-sectional view of the second battery according to the embodiment, which view is seen in the direction of arrows B - B in FIG. 7 and taken along the case width direction and the case thickness direction.

### DETAILED DESCRIPTION OF THE EXEMPLARY EMBODIMENTS

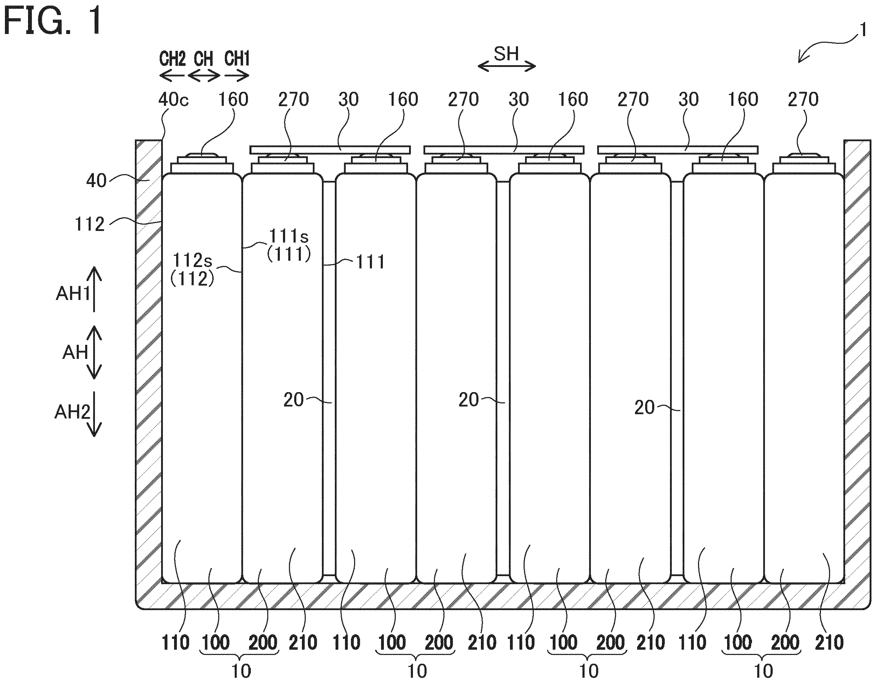

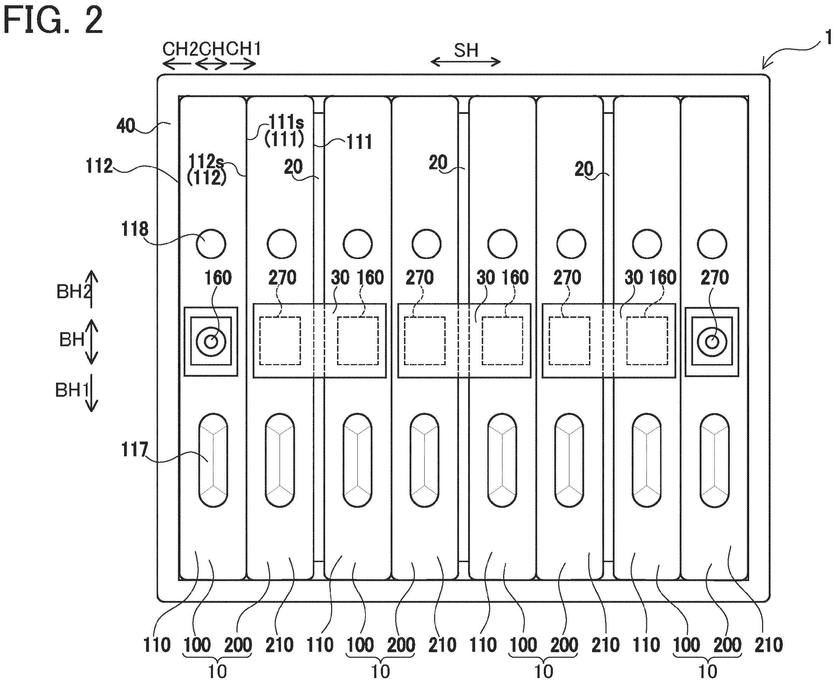

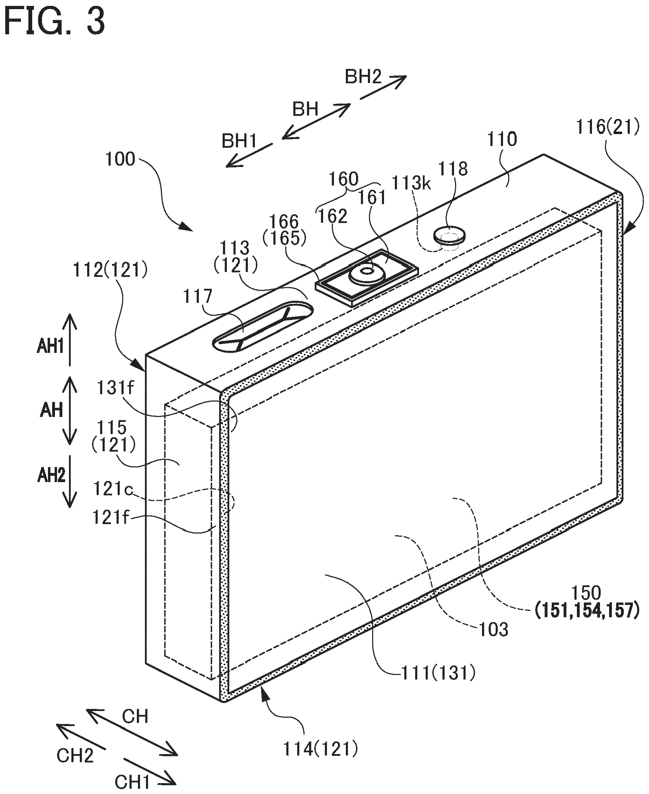

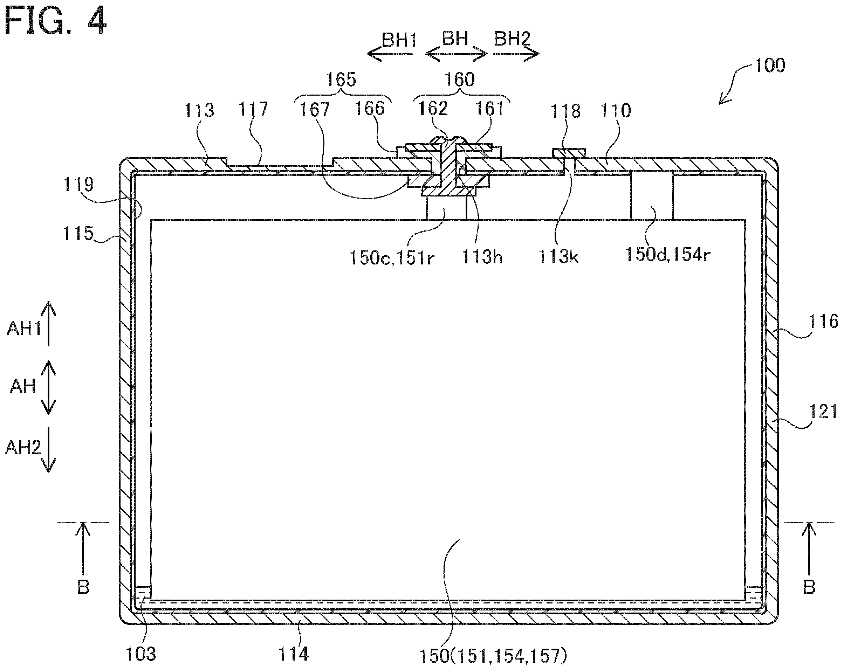

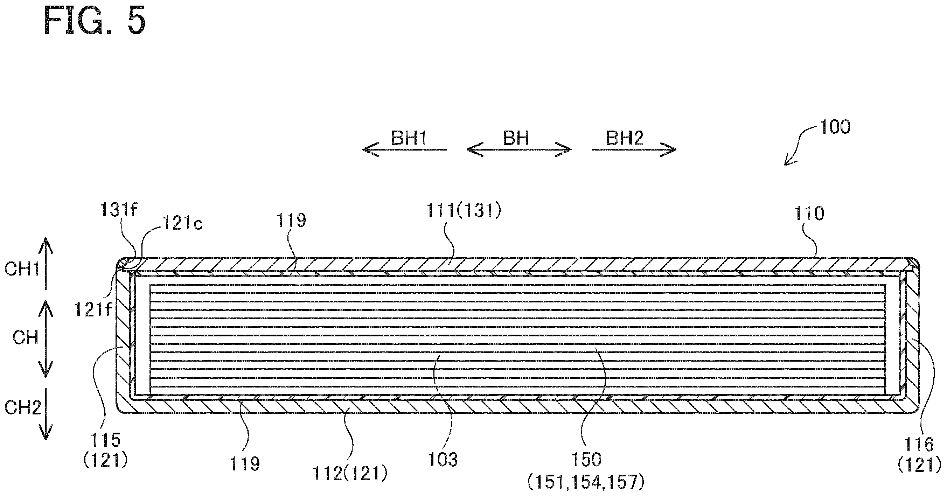

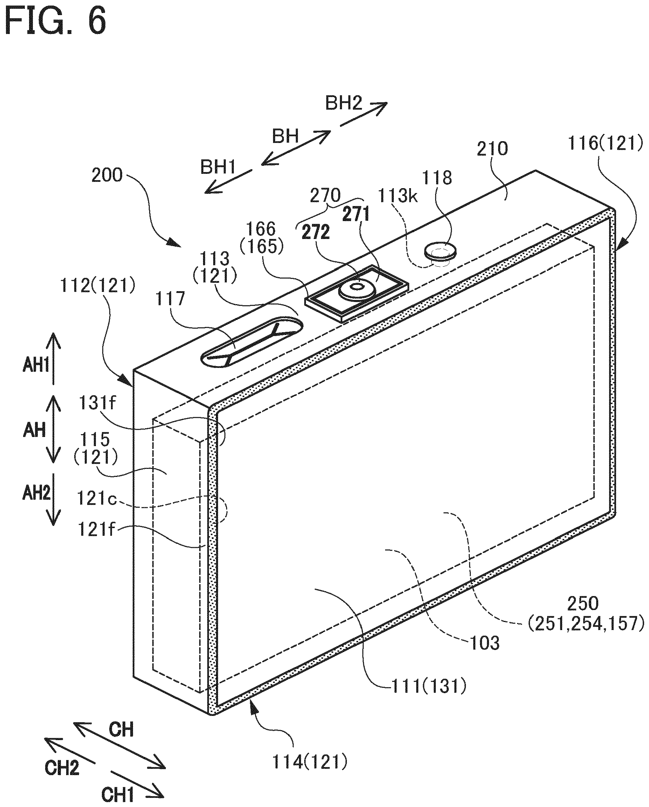

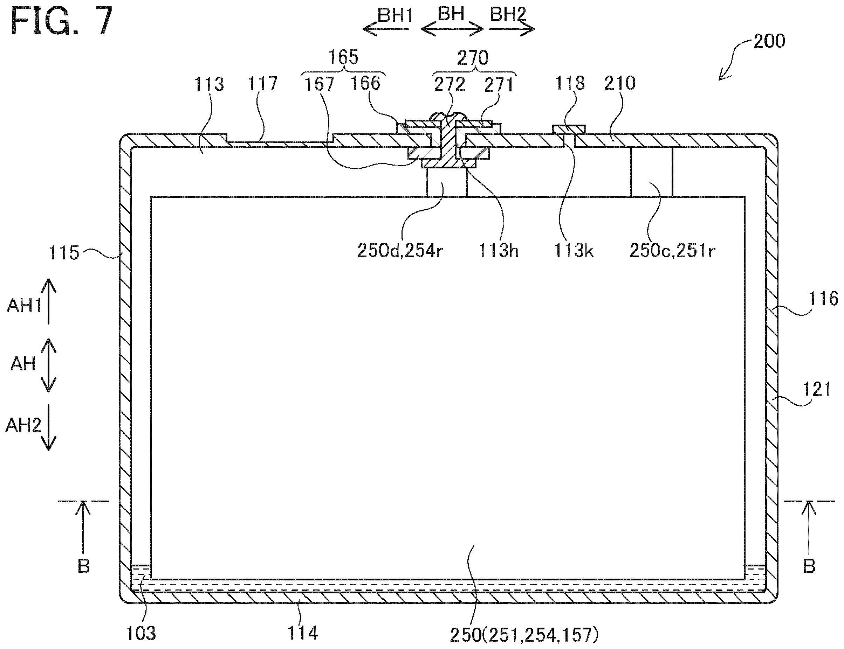

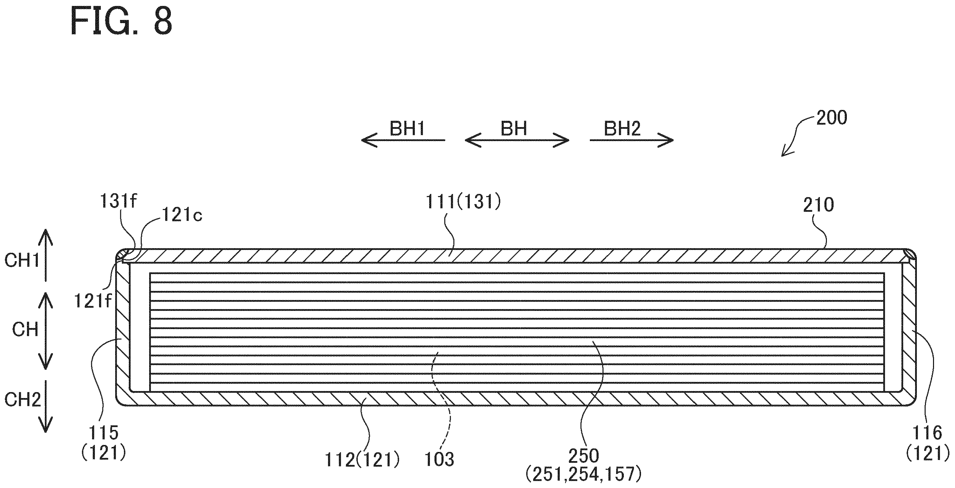

In the following, one embodiment of the invention will be described with reference to the drawings. FIG. 1 is a partially broken cross-sectional view of a battery module (one example of the power storage module of the invention) 1 according to the embodiment, and FIG. 2 is a top view of the battery module 1. FIG. 3 is a perspective view of a first battery (one example of the first power storage device of the invention) 100, and FIG. 4 and FIG. 5 are cross-sectional views of the first battery 100. FIG. 6 is a perspective view of a second battery (one example of the second power storage device of the invention) 200, and FIG. 7 and FIG. 8 are cross-sectional views of the second battery 200. In the following description, the case height direction AH, case width direction BH, and case thickness direction CH of the first battery 100 and the second battery 200 are defined as the directions indicated in FIG. 1 to FIG. 8.

The battery module 1 is installed on a vehicle, such as a hybrid vehicle, plug-in hybrid vehicle, and an electric vehicle. The battery module 1 includes two or more battery pairs (one example of the power storage device pair of the invention) 10 each consisting of the first battery 100 and the second battery 200. Each of the first battery 100 and the second battery 200 is a sealed lithium-ion secondary battery having a rectangular (rectangular parallelepiped) shape.

Initially, the first battery 100 will be described (see FIG. 3 to FIG. 5). The first battery 100 consists of a first case (the case) 110 with a negative electrode potential, a rectangular, stacked electrode body 150 housed in the first case 110, a positive external terminal 160 that is supported by the first case 110 while being insulated therefrom, and so forth. In the first case 110, the electrode body 150 is covered with a bag-like insulating holder (not shown) made from an insulating film. The first case 110 also contains electrolyte 103, and the electrode body 150 is impregnated with a part of the electrolyte 103, while the rest of the electrolyte 103 is collected and kept on a second side wall portion 114 as a bottom wall portion of the first case 110.

The first case 110 is made of metal (aluminum in this embodiment). The first case 110 is shaped like a rectangular box, and has a first main wall portion 111, second main wall portion 112, and four side wall portions 113 - 116 (first side wall portion 113, second side wall portion 114, third side wall portion 115, and fourth side wall portion 116) each having a rectangular shape. A coating layer 119 made of insulating resin is formed over the entire area of the inside surface of the first case 110. The coating layer 119 can prevent the first case 110 held at the negative electrode potential from contacting with the electrolyte 103, thus preventing the first case 110 from reacting with Li contained in the electrolyte 103 to form an alloy.

The area of each of the first main wall portion 111 and the second main wall portion 112 is larger than that of each of the side wall portions 113 - 116. The first main wall portion 111 and the second main wall portion 112 are opposed to each other, and the first main wall portion 111 is located on one side CH1 (i.e., the right, front side in FIG. 3, the upper side in FIG. 5) of the case thickness direction CH, while the second main wall portion 112 is located on the other side CH2 (i.e., the left, rear side in FIG. 3, the lower side in FIG. 5) of the case thickness direction CH.

On the other hand, the side wall portions 113 - 116 respectively extend in the case thickness direction CH, to connect the first main wall portion 111 and the second main wall portion 112. The first side wall portion 113 and the second side wall portion 114 are opposed to each other, and the first side wall portion 113 is located on the upper side AH1 of the case height direction AH, while the second side wall portion 114 is located on the lower side AH2 of the case height direction AH. Also, the third side wall portion 115 and the fourth side wall portion 116 are opposed to each other, and the third side wall portion 115 is located on one side BH1 of the case width direction BH, while the fourth side wall portion 116 is located on the other side BH2 of the case width direction BH.

The first case 110 consists of a case body 121 that is in the form of a rectangular frame with a bottom and a rectangular opening 121c and houses the electrode body 150 therein, and a lid member 131 in the form of a rectangular plate that closes the opening 121c of the case body 121. The case body 121 provides the second main wall portion 112 and four side wall portions 113 - 116 described above. On the other hand, the lid member 131 provides the first main wall portion 111 described above, and a lid peripheral portion 131f of the lid member 131 and an opening peripheral portion 121f of the opening 121c of the case body 121 are hermetically joined (welded in this embodiment) together over the entire circumference thereof.

The first side wall portion 113 that also serves as the upper wall portion of the first case 110 is provided with a safety valve 117 that breaks and opens when the internal pressure of the first case 110 exceeds the valve opening pressure. The first side wall portion 113 is also provided with a liquid inlet 113k that extends through the first side wall portion 113, and the liquid inlet 113k is hermetically sealed with a disc-shaped sealing member 118 made of aluminum.

In the first case 110, a negative current collector 150d of the electrode body 150 is conductively connected to the first side wall portion 113. Accordingly, the first case 110 of the first battery 100 is held at the negative electrode potential.

Furthermore, in a central portion of the first side wall portion 113 as viewed in the case width direction BH, the positive external terminal 160 is fixed to the first side wall portion 113 while being insulated from the first side wall portion 113. More specifically, a through hole 113h that extends through the first side wall portion 113 is provided in the central portion of the first side wall portion 113 as viewed in the case width direction BH, and the positive external terminal 160 is inserted through the through hole 113h, such that the positive external terminal 160 extends from the interior of the first case 110 to the exterior of the first case 110.

The positive external terminal 160 consists of an outer terminal member 161 in the form of a rectangular plate located on the outside (i.e., the upper side AH1) of the first side wall portion 113, and an inner terminal member 162 mainly located on the inside (i.e., the lower side AH2) of the first side wall portion 113 and within the through hole 113h. The outer terminal member 161 and the inner terminal member 162 are made of aluminum. The inner terminal member 162 is conductively connected to a positive current collector 150c of the electrode body 150 described later. Meanwhile, the inner terminal member 162 extends from the inside of the first side wall portion 113 to the outside of the first side wall portion 113 through the through hole 113h, and further penetrates through the outer terminal member 161 to be connected by caulking to the outer terminal member 161.

The positive external terminal 160 and the first side wall portion 113 are insulated from each other via an insulator 165. The insulator 165 consists of an outer resin member 166 made of insulating resin and located on the outside of the first side wall portion 113 and within the through hole 113h, and an inner resin member 167 made of insulating resin and located on the inside of the first side wall portion 113.

Next, the electrode body 150 will be described. The electrode body 150 is formed by alternately superposing a plurality of positive electrode sheets 151 and a plurality of negative electrode sheets 154 in the case thickness direction CH, via separators 157 formed from porous films made of resin. Each of the positive electrode sheets 151, negative electrode sheets 154, and separators 157 has a rectangular shape extending in the case height direction AH and the case width direction BH.

Each of the positive electrode sheets 151 has a positive-electrode foil exposed portion 151r that extends to the upper side AH1 at the center of the sheet 151 as viewed in the case width direction BH, and the respective positive-electrode foil exposed portions 151r are superposed on each other in the thickness direction to form the positive current collector 150c. The positive current collector 150c is conductively connected by welding to the inner terminal member 162 of the positive external terminal 160.

Each of the negative electrode sheets 154 has a negative-electrode foil exposed portion 154r that extends to the upper side AH1 in the vicinity of an end portion of the sheet 154 on the other side BH2 of the case width direction BH, and the respective negative-electrode foil exposed portions 154r are superposed on each other in the thickness direction to form the negative current collector 150d. The negative current collector 150d is conductively connected by welding to the first side wall portion 113 in the first case 110.

The positive electrode sheet 151 consists of a positive current collecting foil made from an aluminum foil, and positive active material layers respectively formed on both main surfaces of the positive current collecting foil. The positive active material layer contains positive active material particles capable of absorbing and releasing lithium ions. A part of the positive current collecting foil extends to the upper side AH1 at the center of the positive electrode sheet 151 as viewed in the case width direction BH as described above, to provide the positive-electrode foil exposed portion 151r that is exposed without the positive active material layers present on both surfaces of the positive current collecting foil.

The negative electrode sheet 154 consists of a negative current collecting foil made from a copper foil, and negative active material layers respectively formed on both main surfaces of the negative current collecting foil. The negative active material layer contains negative active material particles capable of absorbing and releasing lithium ions. A part of the negative current collecting foil extends to the upper side AH1 in the vicinity of the end portion of the negative electrode sheet 154 on the other side BH2 of the case width direction BH as described above, to provide the negative-electrode foil exposed portion 154r that is exposed without the negative active material layers present on both surfaces of the negative current collecting foil.

Next, the second battery 200 will be described (see FIG. 6 to FIG. 8). The description of substantially the same components or portions as those of the first battery 100 will be omitted or simplified. The second battery 200 consists of a second case (the case) 210 with a positive electrode potential, a rectangular, stacked electrode body 250 housed in the second case 210, a negative external terminal 270 that is supported by the second case 210 while being insulated therefrom, and so forth.

The second case 210 has substantially the same configuration as the first case 110 of the first battery 100. Namely, the second case 210 is shaped like a rectangular box having a first main wall portion 111, second main wall portion 112, and four side wall portions 113 - 116, and consists of a case body 121 in the form of a rectangular frame with a bottom, and a lid member 131 in the form of a rectangular plate. It is, however, to be noted that no coating layer is formed on the inside surface of the second case 210.

In the second case 210, the positive current collector 250c of the electrode body 250 is conductively connected to the first side wall portion 113 of the second case 210. Accordingly, the second case 210 of the second battery 200 is held at the positive electrode potential.

Also, in the second battery 200, in a central portion of the first side wall portion 113 as viewed in the case width direction BH, the negative external terminal 270 is fixed to the first side wall portion 113 while being insulated from the first side wall portion 113. More specifically, the negative external terminal 270 is inserted through the through hole 113h provided in the first side wall portion 113, and the negative external terminal 270 extends from the interior of the second case 210 to the exterior of the second case 210.

The negative external terminal 270, which has substantially the same configuration as the positive external terminal 160 of the first battery 100, consists of an outer terminal member 271 and an inner terminal member 272. The outer terminal member 271 and inner terminal member 272 of the negative external terminal 270 are made of copper. The negative external terminal 270 and the first side wall portion 113 are insulated from each other, via an insulator 165 that consists of an outer resin member 166 and an inner resin member 167.

The electrode body 250 is substantially identical with the electrode body 150 of the first battery 100, except that the arrangement of the positive current collector 250c and negative current collector 250d is different from that of the positive current collector 150c and negative current collector 150d of the electrode body 150 of the first battery 100.

The positive current collector 250c of the electrode body 250 is provided in the vicinity of an end portion of the electrode body 250 on the other side BH2 of the case width direction BH. The positive current collector 250c is formed by stacking positive-electrode foil exposed portions 251r as part of the positive electrode sheets 251 extending to the upper side AH1, in the thickness direction. In the second case 210, the positive current collector 250c is conductively connected by welding to the first side wall portion 113 of the second case 210.

In the meantime, the negative current collector 250d of the electrode body 250 is provided at the center of the electrode body 250 as viewed in the case width direction BH. The negative current collector 250d is formed by stacking negative-electrode foil exposed portions 254r as part of negative electrode sheets 254 extending to the upper side AH1, in the thickness direction, and the negative current collector 250d is conductively connected by welding to the inner terminal member 272 of the negative external terminal 270.

Next, the battery module 1 will be described (see FIG. 1 and FIG. 2). The battery module 1 includes a plurality of battery pairs 10, insulating spacers (insulating members) 20 that respectively intervene between adjacent ones of the battery pairs 10, and a module case 40 that houses the battery pairs 10 and the insulating spacers 20.

Each of the battery pairs 10 consists of the first battery 100 and second battery 200 described above, and the first case 110 of the first battery 100 and the second case 210 of the second battery 200 are welded together.

More specifically, the first battery 100 and the second battery 200 are superposed on each other in the case thickness direction CH (i.e., the stacking direction SH), such that the first main wall portion 111 of the first case 110 of the first battery 100 faces the second main wall portion 112 of the second case 210 of the second battery 200. In this condition, a peripheral portion Ills of the first main wall portion 111 of the first battery 100 and a peripheral portion 112s of the second main wall portion 112 of the second battery 200 are welded over the entire circumference thereof. Thus, the first case 110 held at the negative electrode potential of the first battery 100 and the second case 210 held at the positive electrode potential of the second battery 200 are electrically connected, and the first battery 100 and the second battery 200 are connected in series.

The battery pairs 10 included in the battery module 1 are stacked in the stacking direction SH via the insulating spacers 20 each made of insulating resin and shaped like a rectangular plate. Thus, in the battery module 1 of this embodiment, all of the first batteries 100 and the second batteries 200 are stacked in the stacking direction SH.

The positive external terminal 160 of the first battery 100 of one of the battery pairs 10 located adjacent to each other in the stacking direction SH via the corresponding insulating spacer 20 and the negative external terminal 270 of the second battery 200 of the other battery pair 10 are electrically connected via a bus bar (conductive connecting member) 30 in the form of a rectangular plate extending in the stacking direction SH. The bus bar 30 and the positive external terminal 160 or negative external terminal 270 are connected to each other by welding.

The module case 40 is made of resin, and has a rectangular frame-like shape with a bottom and a rectangular opening 40c.

The battery module 1 of the embodiment includes a plurality of battery pairs 10 having the first batteries 100 and the second batteries 200 as described above.

Each of the first batteries 100 does not require an insulating member for the negative electrode, because the first case 110 is electrically connected to the negative current collector 150d of the electrode body 150, and the first case 110 also serves as the negative external terminal. Thus, the number of components can be reduced, as compared with a battery (not shown) in which the positive external terminal and the negative external terminal are respectively insulated from the case.

Also, each of the second batteries 200 does not require an insulating member for the positive electrode, because the second case 210 is electrically connected to the positive current collector 250c of the electrode body 250, and the second case 210 also serves as the positive external terminal. Thus, the number of components can be reduced, as compared with a battery (not shown) in which the positive external terminal and the negative external terminal are respectively insulated from the case.

The first case 110 of the first battery 100 as one of the battery pair 10 and the second case 210 of the second battery 200 as the other of the battery pair 10 are electrically connected to each other; therefore, the first battery 100 and the second battery 200 can be connected with lower resistance, as compared with the case where the electrode external terminals each fixed to the case while being insulated from the case are connected to each other.

Furthermore, in this embodiment, the first case 110 of the first battery 100 as one of each battery pair 10 and the second case 210 of the second battery 200 as the other of the battery pair 10 are welded together. Thus, the resistance can be reduced as compared with the case where the first case 110 and the second case 210 are simply placed in contact with each other.

In this embodiment, the first battery 100 and second battery 200 that form each of the battery pairs 10 are superposed on each other in the stacking direction SH, and the respective battery pairs 10 are stacked in the stacking direction SH via the insulating spacers 20. Thus, it is possible to provide the battery module 1 in which the first battery 100 and second battery 200 that form each battery pair 10 are superposed on each other, while the battery pairs 10 are insulated from each other.

Next, a method of producing the first battery 100, second battery 200, and the battery module 1 including the first batteries 100 and second batteries 200 will be described.

To produce the first battery 100, the case body 121 is prepared, and the positive external terminal 160 is fixed to the first side wall portion 113 of the case body 121. The electrode body 150 is also formed, and the electrode body 150 is wrapped with a bag-like insulating holder (not shown). Then, the positive current collector 150c of the electrode body 150 is laser welded to the inner terminal member 162 of the positive external terminal 160 fixed to the case body 121, and the negative current collector 150d of the electrode body 150 is laser welded to the first side wall portion 113 of the case body 121. The electrode body 150 is housed in the case body 121.

Next, the lid member 131 is placed on the top of the case body 121, and the lid peripheral portion 131f of the lid member 131 is brought into abutting contact with the opening peripheral portion 121f of the case body 121 over the entire circumference thereof. Then, the lid peripheral portion 131f and the opening peripheral portion 121f are laser welded together over the entire circumference, to form the case 110.

Next, the electrolyte 103 is poured into the case 110 through the liquid inlet 113k, so that the electrode body 150 is impregnated with the electrolyte 103. Then, the liquid inlet 113k is covered from the outside with the sealing member 118, and the sealing member 118 is laser welded to the case 110.

Next, a charging device (not shown) is connected to the first battery 100, to initially charge the first battery 100. Then, the initially charged first battery 100 is left to stand over a predetermined time, for aging of the first battery 100. In this manner, the first battery 100 is completed.

The second battery 200 is also produced in substantially the same manner as the first battery 100, except that the relationship between the positive electrode and the negative electrode is different.

Next, the first battery 100 and the second battery 200 are superposed on each other in the case thickness direction CH (i.e., the stacking direction SH), such that the first main wall portion 111 of the first case 110 of the first battery 100 faces the second main wall portion 112 of the second case 210 of the second battery 200. Then, the first main wall portion 111 of the first battery 100 and the second main wall portion 112 of the second battery 200 are laser welded together by applying a laser beam to the boundary between the peripheral portion 111s of the first main wall portion 111 of the first battery 100 and the peripheral portion 112s of the second main wall portion 112 of the second battery 200 over the entire circumference.

Next, the insulating spacers 20 are prepared, and the battery pairs 10 are stacked in the stacking direction SH via the insulating spacers 20, respectively. The battery pairs 10 and the insulating spacers 20 are housed in the module case 40. Then, the positive external terminal 160 and negative external terminal 270 of the battery pairs 10 located adjacent to each other via the insulating spacer 20 are connected via the bus bar 30. The bus bar 30 and the positive external terminal 160 or negative external terminal 270 are laser welded together. In this manner, the battery module 1 is completed.

While the invention has been described above in the light of the embodiment, it is to be understood that the invention is not limited to the embodiment, but may be applied by making changes as needed, without departing from the principle of the invention.

For example, in this embodiment, the insulating spacer 20 made of insulating resin is used as the "insulating member" that insulates the battery pairs 10 from each other, but the insulating member is not limited to this. An insulating film made from an insulating heat-shrinkable film may also be used as the insulating member. More specifically, after the first battery 100 and the second battery 200 are welded to form the battery pair 10, the battery pair 10 is covered with the insulating film made from the heat-shrinkable film, except for its regions close to or including the positive external terminal 160 and the negative external terminal 270. Then, the battery pairs 10 each covered with the insulating film are stacked in the stacking direction SH and housed in the module case.

### Reference Signs List

- 1: Battery module (Power storage module)
- 10: Battery pair (Power storage device pair)
- 20: Insulating spacer (Insulating member)
- 30: Bus bar (Conductive connecting member)
- 100: First battery (First power storage device)
- 200: Second battery (Second power storage device)
- 110: First case (Case)
- 210: Second case (Case)
- 150, 250: Electrode body
- 150c, 250c: Positive current collector
- 150d, 250d: Negative current collector
- 160: Positive external terminal
- 270: Negative external terminal
- 165: Insulator
- SH: Stacking direction

## Claims

1. A power storage module (1) including a plurality of power storage devices (100, 200) each having a case (110, 210) having electrical conductivity, and an electrode body (150, 250) housed in the case (110, 210) and including a positive current collector (150c, 250c) and a negative current collector (150d, 250d),
**characterized in that**
the power storage module (1) comprises
a power storage device pair (10) as a pair of the power storage devices having
a first power storage device (100) in which the case is a first case (110) electrically connected to the negative current collector (150d) of the electrode body (150) and held at a negative electrode potential, the first power storage device having a positive external terminal (160) that is insulated from the first case (110) and fixed to the first case (110), to be connected to the positive current collector (150c) of the electrode body (150) in the first case (110), and
a second power storage device (200) in which the case is a second case (210) electrically connected to the positive current collector (250c) of the electrode body (250) and held at a positive electrode potential, the second power storage device having a negative external terminal (270) that is insulated from the second case (210) and fixed to the second case (210), to be connected to the negative current collector (250d) of the electrode body (250) in the second case (210),
wherein the first case (110) and the second case (210) are electrically connected to each other, and the first power storage device (100) and the second power storage device (200)are connected in series.

2. The power storage module (1) according to claim 1, wherein the power storage device pair (10) is configured such that the first case (110) of the first power storage device (100) and the second case (210) of the second power storage device (200) are welded together.

3. The power storage module (1) according to claim 1 or 2, wherein:
a plurality of the power storage device pairs (10) is provided;
the first power storage device (100) and the second power storage device (200) that form each of the power storage device pairs (10) are superposed on each other in a stacking direction (SH); and
the power storage device pairs (10) are stacked in the stacking direction (SH) with an insulating member (20) intervening between adjacent ones of the power storage device pairs (10).
